(19) **Europäisches Patentamt / European Patent Office / Office européen des brevets**

(11) **EP 2 509 426 B1**

(12) **FASCICULE DE BREVET EUROPEEN**

(45) Date de publication et mention de la délivrance du brevet:
**15.08.2018 Bulletin 2018/33**

(21) Numéro de dépôt: **10803147.7**

(22) Date de dépôt: **07.12.2010**

(51) Int Cl.:
*A01N 61/02* (2006.01)        *A01N 25/02* (2006.01)
*A01N 25/04* (2006.01)        *A01N 25/30* (2006.01)
*A01P 7/04* (2006.01)         *A01P 3/00* (2006.01)

(86) Numéro de dépôt international:
**PCT/IB2010/055623**

(87) Numéro de publication internationale:
**WO 2011/070503 (16.06.2011 Gazette 2011/24)**

(54) **CONCENTRE EMULSIONNABLE POUR COMPOSITION PHYTOSANITAIRE, COMPOSITION PHYTOSANITAIRE ET FILM PHYTOSANITAIRE**

EMULGIERBARES KONZENTRAT FÜR EINE PFLANZENSCHUTZZUSAMMENSETZUNG, PFLANZENSCHUTZZUSAMMENSETZUNG UND PFLANZENSCHUTZFOLIE

EMULSIFIABLE CONCENTRATE FOR A PHYTOSANITARY COMPOSITION, PHYTOSANITARY COMPOSITION, AND PHYTOSANITARY FILM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2009 FR 0958704**

(43) Date de publication de la demande:
**17.10.2012 Bulletin 2012/42**

(73) Titulaire: **TOTAL MARKETING SERVICES**
**92800 Puteaux (FR)**

(72) Inventeurs:
• **BOUSQUE, Mélanie**
  **F-64160 Saint-Laurent-Bretagne (FR)**
• **BOURREL, Maurice**
  **F-64000 Pau (FR)**
• **LAEMMER, Christian**
  **12161 Berlin (DE)**
• **GINGRAS, Jean-Philippe**
  **F-64140 Lons (FR)**

(74) Mandataire: **Hirsch & Associés**
**137, rue de l'Université**
**75007 Paris (FR)**

(56) Documents cités:
**EP-A2- 0 392 127        WO-A1-02/064244**
**WO-A2-2006/126211       US-A1- 2005 261 379**

**Description**

La présente invention concerne un concentré émulsionnable pour composition phytosanitaire, émulsionnée dans l'eau, destinée à être pulvérisée sur les cultures notamment les feuilles et les troncs d'arbres fruitiers à des fins protectrices, notamment à l'égard des insectes, mais aussi pour leur effet fongistatique empêchant le développement de maladies. Elle concerne également la composition phytosanitaire émulsionnée, son mode de fabrication, son utilisation, mais aussi le film protecteur déposé sur les végétaux.

Il est connu d'utiliser des compositions phytosanitaires pour améliorer la protection des cultures, ces compositions pouvant remplir le rôle de fongicide ou encore d'insecticide. Elles sont généralement pulvérisées sur les cultures sous forme d'émulsions eau/huile en présence d'additifs tensioactifs.

Depuis longtemps, des huiles d'origine pétrolière émulsionnées dans l'eau sont pulvérisées sur les cultures dans un but insecticide. Convenablement préparées de telles huiles sont généralement moins phytotoxiques que beaucoup de pesticides synthétiques, et permettent d'affecter les acariens, les mouches, les cochenilles, les punaises, les pucerons et autres insectes rampants ou volants tout en n'affectant que modérément le développement des arbres, des plantes et des cultures en général. Cependant, il est nécessaire que la nature de ces huiles et la nature des additifs tensioactifs présentent un caractère non toxique au regard des végétaux. La plupart des tensioactifs utilisés sont dangereux pour l'environnement et toxiques pour les organismes aquatiques. Parmi les huiles raffinées conventionnelles, obtenues à partir de pétrole brut et/ou des distillats issus du raffinage, par extraction au solvant ou par hydrotraitement d'huiles de base, l'industriel choisira celles qui seront les moins toxiques mais les plus efficaces par exemple à l'encontre des insectes et/ou des attaques fongiques. Il a été ainsi constaté que plus l'huile fabriquée est paraffinique, c'est-à-dire comprend des composés de chaîne carbonée saturée, linéaire ou branchée, plus celle-ci est efficace à l'encontre des insectes et moins elle est phytotoxique pour les plantes.

Néanmoins, ces huiles fortement concentrées en paraffines normales, ont un point d'écoulement plus élevé, ce qui rend leur application plus difficile dans des pays tempérés, notamment pour les traitements pratiqués l'hiver, car le concentré obtenu à partir de cette huile se fige.

Dans leur formulation finale, ces émulsions eau/huile comprennent généralement de 1 à 3 % en poids d'un émulsifiant par rapport à la quantité d'hydrocarbures pour assurer la stabilité de l'émulsion pendant toute la durée de la pulvérisation des cultures. Parmi les émulsifiants conventionnels, on trouve les alkylphénols éthoxylés, mais aussi les combinaisons d'additifs tels que décrits dans les brevets US6673360 et US6515031. Ces brevets suggèrent de combiner des alcools polyéthoxylés comprenant des chaînes carbonées de C10 à C16, le nombre moyen de groupements éthoxylés par chaîne carbonée étant de 2,8, en mélange avec des mono/dioléates de glycérol. Ils recommandent l'utilisation d'huiles hydrocraquées et/ou hydroisomérisées, comprenant plus de 99% de composés saturés, ces combinaisons d'additifs permettant d'incorporer dans ces émulsions aussi bien de l'eau douce que de l'eau dure, c'est-à-dire fortement salée.

Le document WO 02/064244 décrit un mélange émulsifiant comprenant :

- des alcools éthoxylés contenant des chaines carbonées en C10-C16 et ayant en moyenne, au moins 2,8 groupes éthoxy et / ou alcool par chaîne carbonée et
- des mono- et/ou dioléates de glycérol,

ledit mélange émulsifiant comprenant de 90% à 40% en poids d'alcools éthoxylés et de 10% à 60% en poids de mono- et/ou dioléates de glycérol. Le mélange est utile lorsqu'il est combiné à des huiles hydroisomérisées et de l'eau, pour une application ultérieure sous forme d'huile destinée à être pulvérisée sur des cultures agricoles.

Le document WO 2006/126211 décrit une huile agricole destinée à être pulvérisée sur des cultures, ladite huile comprenant une huile paraffinique hydrotraitée et une combinaison d'émulsifiants nonioniques pouvant contenir du monooléate de sorbitan et/ou du monooléate de sorbitan polyoxyéthylé et/ou du monostéarate de sorbitan polyoxyéthylé.

Le document US 2005/0261379 décrit une huile destinée à être pulvérisée sur du gazon, ladite huile comprenant :

- une huile paraffinique
- un émulsifiant permettant une cassure rapide de l'émulsion, le ratio massique de l'huile paraffinique sur l'émulsifiant variant entre environ 95:5 et environ 99.95 :0.05, ledit émulsifiant pouvant être choisi dans le groupe consistant en les alkyl phénol éthoxylates, les nonyl phénol éthoxylates, les dodécyl phénol éthoxylates, et les mélanges d'alcool éthoxylés et d'oléate de glycérol, et des combinaisons de ceux-ci.

Le document EP 0 392 127 décrit une composition pesticide comprenant jusqu'à 96% d'huile minérale et/ou d'huile végétale, le restant étant constitué d'au moins deux tensioactifs, anioniques et/ou nonioniques ou les deux, qui dans l'eau forment une microémulsion ou une solution colloïdale. Le tensioactif peut être un acide gras éthoxylé.

Le but de la présente invention est de disposer de concentrés émulsionnables stables au stockage qui se mettent en émulsion facilement, mais qui se cassent au contact de la plante pour former le film d'huile homogène sur les cultures, notamment les troncs, les branches et les feuilles pour assurer une fonction insecticide et dont l'eau s'élimine instantanément par ruissellement. Cette ambivalence entre la stabilité avant et pendant la pulvérisation, et la séparation immédiate après, est au coeur de l'invention. En outre, le système tensioactif devrait être inoffensif pour l'environnement.

En outre, la présente invention a également pour but d'obtenir des concentrés émulsionnables stables, facilement transportables, évitant le transport de quantités d'eau inutiles car disponibles sur place, et dont la mise en émulsion est facilitée sur le site des récoltes à traiter. Un autre but de l'invention est que, lorsque l'émulsion se rompt au contact des plantes et des arbustes, la quantité d'eau restant dans le film de protection déposé soit minimale.

La présente invention a donc pour objet un concentré émulsionnable pour composition phytosanitaire macroémulsionnée, comprenant plus de 90% en poids d'au moins un mélange d'hydrocarbures de coupe de distillation supérieure à 250°C, comprenant moins de 20% en poids de n-paraffines et moins de 1% d'aromatiques, et de 1 à 4% en poids d'un mélange d'au moins deux tensioactifs TA1 et TA2, tels que TA2 est plus hydrophobe que TA1 pour une différence de HLB entre TA1 et TA2 variant de 3 à 11 et dont la HLB du mélange varie de 6 à 10 et comprenant

- de 0.0001% à 1% en poids d'eau, le tensioactif TA1 étant choisi parmi les acides carboxyliques polyalcoxylés, comprenant une chaîne carbonée de 16 à 20 atomes de carbone à au moins une liaison oléfinique, chaque groupement polyalkoxylé comprenant de 3 à 15 radicaux alcoxylés, lui-même comprenant de 1 à 4 carbones par atome d'oxygène, la HLB du dit TA1 variant de 5 à 16.

Les compositions émulsionnées de ces concentrés une fois pulvérisées sur les arbres et les feuilles forment un film qui va jouer le rôle d'insecticide, ou encore de fongicide : l'application des ces compositions peut donc avoir un effet curatif par rapport aux maladies ou encore préventif pour protéger les cultures de maladies potentielles liées à la présence d'insectes nocifs et/ou de l'apparition d'espèces fongiques peu favorables à leur développement. Ces concentrés ne sont nocifs ni pour l'environnement, ni pour l'homme. En outre, ces compositions déposées en film ne bloquent pas la photosynthèse des plantes bien que ce film ralentisse leur croissance. Cet inconvénient peut être avantageusement atténué en dosant les périodes de pulvérisation en fonction de la vitesse de croissance recherchée et l'effet de nuisance du milieu environnant à l'égard du développement des cultures. Le dépôt du film est avant tout un traitement physique : l'effet insecticide est obtenu par asphyxie des insectes présents (manque d'air) ou barrière leur limitant l'accès.

Dans le cadre de la présente invention, le concentré (sous forme d'une émulsion) comprend de 0,0001% à 1% en poids d'eau pour éviter l'apparition d'un dépôt correspondant à une précipitation de TA1.

En outre, on choisira un mélange de tensioactifs dont la différence de HLB entre TA1 et TA2 varie de 3 à 11 et dont le HLB du mélange est compris entre 6 et 10.

Parmi les hydrocarbures issus du raffinage, on préfère les mélanges qui comprennent moins de 10ppm de soufre et moins de 100ppm d'aromatiques, et parmi ceux-ci les hydrocarbures hydrodéparaffinés contenant plus de 50% en poids d'isoparaffines et des hydrocarbures désulfurés et déaromatisés contenant plus de 20% en poids de naphtènes.

Il est entendu que par naphtènes on entend également des naphtènes di et tricycliques.

L'avantage de ces hydrocarbures est que contrairement aux paraffines normales, leur point d'écoulement déterminé par l'ASTM D97 est largement plus faible que celui des paraffines normales ou n-paraffines et peut être bien inférieur à -10°C ce qui facilite leur transport et leur stockage dans des environnements froids.

Plus particulièrement, on préfère les hydrocarbures contenant plus de 60% d'isoparaffines issus des procédés d'isodéparaffinage de coupe de distillation comprises entre 300 et 400°C dont le point d'écoulement est inférieur à -10°C. Parmi ces hydrocarbures non phytotoxiques, on préfère les mélanges hydrocarbonés comprenant plus de 50% en poids d'hydrocarbures contenant de 15 à 30 atomes de carbone, et de préférence plus de 70 % d'hydrocarbures de 18 à 26 atomes de carbones.

D'autres hydrocarbures sont utilisables, ce sont des coupes gazoles de températures d'ébullition supérieure à 250°C, issues de l'hydrocraquage des gazoles de distillation sous vide ou d'autres procédés de raffinage, ces coupes ayant été désulfurées et/ou déaromatisées par hydrogénation catalytique puis distillées en coupes d'intervalle inférieur à 75°C. Les coupes préférées, de températures variant de 300 à 400°C, comprenant plus de 20% de naphtènes présentent l'avantage d'atteindre des points d'écoulement inférieurs à -15°C.

Le concentré selon l'invention comprendra de préférence de 2 à 3% de tensioactif TA1, et de 0,1 à 0,9 % de tensioactif TA2. Pour obtenir la stabilité optimale du concentré, sa teneur en eau devra être maintenue entre 0,05 et 0,5% en poids du concentré.

Parmi les tensioactifs disponibles du marché, TA1 est choisi parmi les acides carboxyliques polyalcoxylés, comprenant une chaîne carbonée de 16 à 20 atomes de carbone à au moins une liaison oléfinique, chaque groupement polyalkoxylé comprenant de 3 à 15 radicaux alcoxylés, lui-même comprenant de 1 à 4 carbones par atome d'oxygène. L'HLB de ce tensioactif variera entre 5 et 16, et de préférence de 8 à 12. Dans un mode préféré de l'invention, le tensioactif TA1 est un acide oléique polyéthoxylé comprenant de 4 à 8 radicaux éthoxylés, de préférence 6 radicaux éthoxylés en moyenne.

Le tensioactif TA2 est choisi parmi les mono et/ou polycarboxylates de sorbitan, les mono et/ou polycarboxylates de sorbitan polyéthoxylés, les mono et/ou polycarboxylates de glycerol ou mono et/ou polycarboxylates de sorbitan polyéthoxylés comprenant 1 à 3 chaînes carbonées de 12 à 20 atomes de carbone à au moins une liaison oléfinique, chaque groupement polyéthoxylé comprenant 1 à 5 groupements éthoxylés. La HLB du tensioactif TA2 varie de 1 à 11 et de préférence de 1 à 5. Le monooléate de sorbitan et le monooléate de glycérol et leur mélange sont préférés.

Un autre objet de l'invention est la macroémulsion comprenant de 0,5 à 10 % en poids du concentré tel que décrit ci-dessus et de 99,5 à 90% d'eau douce et/ou salée. De préférence le mélange est mis en émulsion (ou macroémulsion) de telle sorte que la taille des gouttelettes d'huile ne soit pas trop large pour permettre une stabilité minimale de l'émulsion le temps de la pulvérisation sur les cultures, mais pas trop fine pour permettre la rupture de l'émulsion sur la feuille et le ruissellement de l'eau.

Ces conditions correspondent à des temps de crémage, ou temps de déstabilisation, de l'émulsion mesurés au laboratoire par la méthode CIPAC (Collaborative International Pesticides Analytical Council) MT36. Pour obtenir une stabilité optimale de l'émulsion, on préfère un temps de crémage inférieur à 10 minutes, de préférence compris entre 25 secondes et 2 minutes.

De préférence, l'émulsion comprend de 0,5 à 3 % en poids du concentré et de 97 à 99,5% d'eau douce et/ou salée.

Un autre objet de l'invention est le procédé de préparation de la macroémulsion sur le site de traitement des cultures. Le concentré, une fois transporté sur le site de pulvérisation, sera mélangé avec la quantité d'eau nécessaire dans une cuve. Le mélange résultant sera mis en émulsion au moyen d'un émulsionneur statique ou d'un rotor stator placé à l'intérieur de la cuve ou sur une conduite de dérivation externe à la cuve permettant le recycle de l'émulsion et son homogénéisation.

Un autre objet de l'invention est l'utilisation de la macroémulsion pour le traitement insecticide et/ou fongicide dans les cultures, ces cultures pouvant être de toutes sortes. L'émulsion est particulièrement adaptée pour les cultures d'arbres fruitiers, notamment les cultures de bananes et d'agrumes (orangers, citronniers ..) .

Un dernier objet de l'invention est le film d'huile homogène déposé sur les cultures, notamment sur les troncs et les feuilles comprenant moins de 5% d'eau, de préférence moins de 0.5%. Les tensioactifs TA1 et TA2 sont entraînés dans l'eau.

Pour illustrer l'invention, des exemples sont donnés ci-après, mais ne peuvent être considérés comme limitatifs de l'invention.


EXEMPLE I

Le présent exemple vise à décrire la préparation de concentrés émulsionnables qui sont composés de 3 % en poids d'un mélange de deux tensioactifs TA1 et TA2, 0,1 % en poids d'eau et de 96,9 % d'hydrocarbures. Ces hydrocarbures sont constitués d'une coupe gazole désaromatisée de température de coupe comprise entre 305 et 380°C contenant 27% de naphtènes et 73% de paraffines, dont plus de 90% en poids d'isoparaffines.

Plusieurs combinaisons de tensioactifs TA1 et TA2 ont été testés : les caractéristiques de ces mélanges sont décrites dans le Tableau I ci-après. Les échantillons de concentrés obtenus sont référencés Xi.

TABLEAU I

| Concentrés | Tensioactifs | | HLB eq | | | Ecotoxicité | | Dépôt visible |
|---|---|---|---|---|---|---|---|---|
| | TA1 | TA2 | TA1 | TA2 | Mél. | TA1 | TA2 | |
| X1* | AlcoolC13-C15 éthoxylé 2 OE | Monooléate de sorbitan | 5,9 | 4,3 | 5,6 | élevé | Faible | Non |
| X2* | Triglycérides de colza éthoxylés 20 OE | Monooléate de sorbitan | 8,9 | 4,3 | 7,1 | faible | Faible | Non |
| X3 | Acide oléique éthoxylé 10 OE | Monooléate de sorbitan | 12,0 | 4,3 | 9,4 | faible | faible | non |
| X4 | Acide oléique éthoxylé 6 OE | Monooléate de sorbitan | 9,8 | 4,3 | 8,9 | faible | faible | Non |
| * (hors invention) | | | | | | | | |

Le mélange satisfait une loi de mélange linéaire sur la base des fractions pondérales de chacun des tensioactifs : ainsi le HLB moyen est égal à xHLB(TA1)+yHLB(TA2), x et y correspondant aux concentrations pondérales de ces TAi dans le mélange.

Les émulsions selon l'invention, préparées à partir des concentrés Xi, satisfont certaines caractéristiques. Elles ne présentent pas de dépôt après 14 jours de stockage à 54°C selon la procédure préconisée par CIPAC MT 46.3.1, et satisfont au test de crémage décrit ci-après. Le test de crémage est effectué selon la procédure CIPAC MT 36. Les émulsions sont préparées dans une éprouvette graduée par dispersion de 5mL d'un concentré émulsionnable dans 95 ml d'eau dure (contenant 274 ppm de CaCO3 et 27 ppm de MgO). Le concentré et l'eau sont préchauffés à 30°C pour être plus facilement émulsionnés, et l'émulsion est formée par renversements successifs de la même éprouvette après l'avoir obturée. On mesure ensuite pour chaque éprouvette le temps de crémage c'est-à-dire le temps nécessaire à l'obtention de 4ml d'hydrocarbures. Le tableau II indique le temps de crémage pour chacun des concentrés Xi du tableau I.

TABLEAU II

| Emulsion | concentré | HLBeq | Temps de crémage/ 4 mL huile (sec.) |
|----------|-----------|-------|--------------------------------------|
| E1 | X1 | 5,6 | 33 |
| E2 | X2 | 7,1 | 15 |
| E3 | X3 | 9,4 | 17 |
| E4 | X4 | 8,9 | 40 |

Si on compare la stabilité des émulsions selon l'invention à celle des émulsions de l'art antérieur (ici E1), on constate que les émulsions selon l'invention donnent un temps de crémage raisonnable, c'est-à-dire une résistance à la séparation suffisante avant pulvérisation et ruissellement de l'eau au contact avec les cultures. On note en outre, que la présence de dépôt est rédhibitoire pour une application alimentaire sur des agrumes. En effet, l'apparition de dépôt prouve un défaut d'homogénéité de l'émulsion et donc un produit de propriétés différentes de celles attendues.

De plus, les concentrés d'additifs des émulsions selon l'invention, X2, X3 et X4 présentent le meilleur compromis en HLB moyen avec des tensioactifs de HLB très différents. Contrairement aux émulsions de l'art antérieur, ces tensioactifs sont tous ecotox.

EXEMPLE III

Le présent exemple vise à exemplifier les effets fongicides et insecticides de l'émulsion selon l'invention.

On prépare des échantillons de produits à tester sur des cultures d'agrumes (oranges). La référence R correspond à une parcelle sans traitement des agrumes.

On utilise des émulsions selon l'invention obtenues à partir de X4, à 3% dans un mélange d'hydrocarbures tel que décrit dans l'exemple 1 pour former le concentré. Ce concentré est mélangé à des concentrations de 1 et 2 % dans l'eau puis émulsionné. On asperge les agrumes à raison de 1200L/ha. On compare l'efficacité de ces émulsions par rapport à celle d'une émulsion de l'art antérieur T1, telle que décrite ci-après et à une référence chimique correspondant à l'utilisation d'un pesticide de synthèse, ici du Chlorpyrifos référencé T2.

Pour l'émulsion T1, on prépare le concentré en utilisant 1.4% de l'alcool C12-C14 éthoxylé et 1.6% de phosphate acide d'alcool C13 éthoxylé dans le même mélange d'hydrocarbures. Comme précédemment, ce concentré est mélangé à des concentrations de 1 et 2 % dans l'eau puis émulsionné. Les émulsions résultantes sont appliquées à l'identique sur des agrumes.

On va vérifier l'efficacité des ces émulsions pour prévenir l'action nocive des insectes, en comparaison avec les références et l'art antérieur. Pour cela, on compte le nombre d'insectes présents au moment de l'application des émulsions sur la référence et le nombre d'insectes ayant résisté au traitement après 20 jours.

On mesure l'efficacité selon la formule d'Abbott basé sur le nombre d'insectes vivants, le nombre d'insectes morts et le % d'agrumes infectés (plus de 3 insectes par fruits).

Cette formule d'Abbott s'écrit comme suit :

```
%efficacité=  [(non  traités  -  traités)/non
traités)] x 100
```

Les résultats sont donnés dans le tableau III et IV ci-après. (1/hl indique 1 de concentré par hl d'eau)

Tableau III

| Nom du Parasite | | *Aonidiella aurantii* | | | | |
|---|---|---|---|---|---|---|
| Type d'Evaluation | | Nombre d'individus vivants | Nombre d'individus vivants | Nombre. individus morts | % mortalité | % fruits infecté |
| Temps de référence | | t=0 | t+20jours | t+20jours | t+20jours | t+20jours |
| Traitement | Concentration | | | | | |
| R | -- | 225.5 | 231.8 | 3.0 | 1.3 | 46.5 |
| E4 | 1.01/hl | 215.3 | 58.0 | 145.0 | 71.4 | 12.3 |
| E4 | 2.01/hl | 211.0 | 22.0 | 175.5 | 88.8 | 7.8 |
| T1 | 1.01/hl | 216.8 | 59.0 | 160.0 | 73.0 | 12.3 |
| T1 | 2.01/hl | 207.3 | 21.5 | 177.5 | 89.1 | 7.0 |
| T2 | 0.151/hl | 216.5 | 23.5 | 172.0 | 88.0 | 7.8 |

Tableau IV

| Nom du Parasite | | *Aonidiella aurantii* | |
|---|---|---|---|
| Type d'Evaluation | | % Efficacité (Base sur le Nombre d'individus vivants) | % Efficacité (Base sur la mortalité) |
| Temps de référence (jours) | | t+20 | t+20 |
| Traitement | concentration | | |
| E4 | 1.01/ hl | 75.0 | 73.7 |
| E4 | 2.01/ hl | 90.5 | 83.3 |
| T1 | 1.01/hl | 74.5 | 73.7 |
| T1 | 2.01 hl | 90.7 | 84.9 |
| T2 | 0.151/ hl | 89.9 | 83.3 |

**Revendications**

1. Concentré émulsionnable pour composition phytosanitaire macroémulsionnée, comprenant :

   - plus de 90% en poids d'au moins un mélange d'hydrocarbures de coupe de distillation supérieure à 250°C, comprenant moins de 20% en poids de n-paraffines et moins de 1% d'aromatiques, et
   - de 1 à 4% en poids d'un mélange d'au moins deux tensioactifs TA1 et TA2, tels que TA2 est plus hydrophobe que TA1 pour une différence de HLB entre TA1 et TA2 variant de 3 à 11 et dont la HLB du mélange varie de 6 à 10 et comprenant
   - de 0.0001% à 1% en poids d'eau, le tensioactif TA1 étant choisi parmi les acides carboxyliques polyalcoxylés, comprenant une chaîne carbonée de 16 à 20 atomes de carbone à au moins une liaison oléfinique, chaque groupement polyalkoxylé comprenant de 3 à 15 radicaux alcoxylés, lui-même comprenant de 1 à 4 carbones par atome d'oxygène, la HLB du dit TA1 variant de 5 à 16.

2. Concentré selon la revendication 1 **caractérisé en ce que** le mélange d'hydrocarbures comprend moins de 10ppm de soufre et moins de 100ppm d'aromatiques et est choisi dans le groupe constitué par les hydrocarbures hydrodéparaffinés contenant plus de 50% en poids d'isoparaffines et des hydrocarbures désulfurés et déaromatisés contenant plus de 20% en poids de naphtènes dont plus de 10% sont des polynaphtènes.

3. Concentré selon l'une des revendications 1 et 2 **caractérisé en ce que** le mélange hydrocarboné comprend plus de 50% en poids d'hydrocarbures contenant de 15 à 30 atomes de carbone.

**4.** Concentré selon la revendication 3, **caractérisé en ce que** le mélange hydrocarboné comprend plus de 70% en poids d'hydrocarbures contenant de 18 à 26 atomes de carbone.

**5.** Concentré selon l'une des revendications 1 à 2 **caractérisé en ce que** le mélange d'hydrocarbures est choisi parmi les coupes gazoles de températures d'ébullition supérieure à 250°C, issues de l'hydrocraquage des gazoles de distillation sous vide ou d'autres procédés de raffinage, ces coupes ayant été désulfurées et/ou déaromatisées par hydrogénation catalytique puis distillées en coupes d'intervalle inférieur à 75°C, ces coupes comprenant plus de 20% de naphtènes et présentant un point d'écoulement inférieur à -15°C.

**6.** Concentré selon l'une des revendications 1 à 5 **caractérisé en ce qu'**il comprend de 2 à 3% de tensioactif TA1, et de 0,1 à 0.9 de tensioactif TA2.

**7.** Concentré selon l'une des revendications précédentes **caractérisée en ce que** la teneur en eau est comprise entre 0,05 et 0,5% en poids du concentré.

**8.** Concentré selon l'une des revendications précédentes **caractérisé en ce que** le tensioactif TA1 est choisi parmi les acides oléiques polyéthoxylés comprenant de 4 à 8 radicaux éthoxylés.

**9.** Concentré selon la revendication 8, **caractérisé en ce que** les acides oléiques polyéthoxylés comprennent 6 radicaux éthoxylés en moyenne.

**10.** Concentré selon l'une des revendications précédentes **caractérisé en ce que** le tensioactif TA2 est choisi parmi les mono et/ou polycarboxylates de sorbitan, les mono et/ou polycarboxylates de sorbitan éthoxylé et les mono et/ou polycarboxylates de glycérol éthoxylé, chaque groupement polycarboxylate comprenant 1 à 3 chaînes carbonées de 12 à 20 atomes de carbone à au moins une liaison oléfinique, le groupement polyéthoxylé comprenant 1 à 5 groupements éthoxylés, la HLB du dit TA2 variant de 1 à 11.

**11.** Concentré selon l'une des revendications précédentes **caractérisé en ce que** le tensioactif TA2 est un monooléate de sorbitan ou un monooléate de glycérol ou leur mélange.

**12.** Macroémulsion phytosanitaire comprenant de 0.5% à 10 % en poids du concentré selon l'une des revendications 1 à 11 et de 99.5% à 90% d'eau douce et/ou salée.

**13.** Macroémulsion selon la revendication 12 **caractérisée en ce qu'**elle comprend de 0.5 à 3 % en poids du concentré et de 97 à 99.5% d'eau douce et ou salée et dont le temps de crémage selon la procédure MT36 est compris entre 25 secondes et 2 minutes.

**14.** Procédé de fabrication de la macroémulsion selon l'une des revendications 12 à 13 consistant à mettre en mélange dans une cuve le concentré et l'eau sur le site d'application de la macroémulsion et de l'émulsionner au moyen d'un émulsionneur statique ou d'un rotor stator.

**15.** Utilisation de la macroémulsion selon l'une des revendications 12 à 13 pour le traitement insecticide et/ou fongicide dans les cultures.

**16.** Utilisation de la macroémulsion selon l'une des revendications 12 à 13 et 15 pour les cultures d'arbres fruitiers.

**17.** Utilisation selon la revendication 16, pour les cultures de bananes et d'agrumes.

**18.** Film d'huile homogène obtenu par vaporisation de la macroémulsion selon l'une des revendications 12 à 13, ledit filmcomprenant moins de 5% d'eau.

**19.** Film d'huile homogène selon la revendication 18, comprenant moins de 0,5% d'eau.

**Patentansprüche**

**1.** Emulgierbares Konzentrat für eine makroemulgierte Pflanzenschutzzusammensetzung, umfassend:

- mehr als 90 Gew.-% mindestens einer Mischung aus Kohlenwasserstoffen eines Schnitts mit einer Destillationstemperatur über 250 °C, umfassend weniger als 20 Gew.-% n-Paraffine und weniger als 1 % Aromaten, und

- 1 bis 4 Gew.-% einer Mischung aus mindestens zwei Tensiden TA1 und TA2, so dass TA2 hydrophober ist als TA1 um eine HLB-Differenz zwischen TA1 und TA2, die im Bereich zwischen 3 und 11 liegt und wobei der HLB-Wert der Mischung im Bereich zwischen 6 und 10 liegt, und umfassend

- 0,0001 Gew.-% bis 1 Gew.-% Wasser, wobei das Tensid TA1 ausgewählt ist aus den polyalkoxylierten Carbonsäuren, umfassend eine Kohlenstoffkette mit 16 bis 20 Kohlenstoffatomen mit mindestens einer Olefinbindung, wobei jede polyalkoxylierte Gruppe 3 bis 15 alkoxylierte Reste umfasst, die selbst 1 bis 4 Kohlenstoffe pro Sauerstoffatom umfasst, wobei der HLB-Wert des TA1 im Bereich zwischen 5 und 16 liegt.

2. Konzentrat nach Anspruch 1, **dadurch gekennzeichnet, dass** die Kohlenwasserstoffmischung weniger als 10 ppm Schwefel und weniger als 100 ppm Aromaten umfasst und ausgewählt ist aus der Gruppe bestehend aus den mit Wasserstoff entparaffinierten Kohlenwasserstoffen, die mehr als 50 Gew.-% Isoparaffine enthalten, und den entschwefelten und entaromatisierten Kohlenwasserstoffen, die mehr als 20 Gew.-% Naphtene enthalten, wovon mehr als 10 % Polynaphtene sind.

3. Konzentrat nach einem der Ansprüche 1 und 2, **dadurch gekennzeichnet, dass** die Kohlenwasserstoffmischung mehr als 50 Gew.-% Kohlenwasserstoffe umfasst, die 15 bis 30 Kohlenstoffatome enthalten.

4. Konzentrat nach Anspruch 3, **dadurch gekennzeichnet, dass** die Kohlenwasserstoffmischung mehr als 70 Gew.-% Kohlenwasserstoffe umfasst, die 18 bis 26 Kohlenstoffatome enthalten.

5. Konzentrat nach einem der Ansprüche 1 bis 2 **dadurch gekennzeichnet, dass** die Kohlenwasserstoffmischung ausgewählt ist aus den Gasölschnitten mit Siedepunkten über 250 °C, die aus dem Hydrokracken von Vakuumdestillationsgasölen oder anderen Raffinationsverfahren stammen, wobei diese Schnitte durch katalytische Hydrierung entschwefelt und/oder entaromatisiert wurden, dann in Schnitten mit Intervallen kleiner 75 °C destilliert wurden, wobei diese Schnitte mehr als 20 % Naphtene umfassen und einen Stockpunkt kleiner -15 °C aufweisen.

6. Konzentrat nach einem der Ansprüche 1 bis 5, **dadurch gekennzeichnet, dass** es 2 bis 3 % Tensid TA1 und 0,1 bis 0,9 Tensid TA2 umfasst.

7. Konzentrat nach einem der vorhergehenden Ansprüche, **dadurch gekennzeichnet, dass** der Wassergehalt im Bereich zwischen 0,05 und 0,5 Gew.-% des Konzentrats liegt.

8. Konzentrat nach einem der vorhergehenden Ansprüche, **dadurch gekennzeichnet, dass** das Tensid TA1 ausgewählt ist aus polyethoxylierten Ölsäuren, die 4 bis 8 ethoxylierte Reste umfassen.

9. Konzentrat nach Anspruch 8, **dadurch gekennzeichnet, dass** die polyethoxylierten Ölsäuren durchschnittlich 6 ethoxylierte Reste umfassen.

10. Konzentrat nach einem der vorhergehenden Ansprüche, **dadurch gekennzeichnet, dass** das Tensid TA2 ausgewählt ist aus den Sorbitanmono- und/oder -polycarboxylaten, den ethoxylierten Sorbitanmono- und/oderpolycarboxylaten, den ethoxylierten Glycerinmono- und/oder -polycarboxylaten, wobei jede Polycarboxylatgruppe 1 bis 3 Kohlenstoffketten mit 12 bis 20 Kohlenstoffatomen mit mindestens einer Olefinbindung umfasst, wobei die polyethoxylierte Gruppe 1 bis 5 ethoxylierte Gruppen aufweist, wobei der HLB-Wert des TA2 im Bereich zwischen 1 und 11 liegt.

11. Konzentrat nach einem der vorhergehenden Ansprüche, **dadurch gekennzeichnet, dass** das Tensid TA2 ein Sorbitanmonooleat oder ein Glycerolmonooleat oder eine Mischung davon ist.

12. Pflanzenschutzmakroemulsion, umfassend 0,5 Gew.-% bis 10 Gew.-% des Konzentrats nach einem der Ansprüche 1 bis 11 und 99,5 % bis 90 % Frisch- und/oder Salzwasser.

13. Makroemulsion nach Anspruch 12, **dadurch gekennzeichnet, dass** sie 0,5 bis 3 Gew.-% des Konzentrats und 97 bis 99,5 % Frisch- und/oder Salzwasser umfasst, und dass ihre Aufrahmzeit gemäß dem MT36-Verfahren zwischen 25 Sekunden und 2 Minuten liegt.

14. Verfahren zur Herstellung der Makroemulsion nach einem der Ansprüche 12 bis 13, das darin besteht, am Anwendungsort der Makroemulsion in einem Bottich eine Mischung aus dem Konzentrat und dem Wasser herzustellen und sie mithilfe eines statischen Emulgators oder eines Rotor-Stator-Mischers zu emulgieren.

15. Verwendung der Makroemulsion nach einem der Ansprüche 12 bis 13 zur Insektizid- und/oder Fungizidbehandlung von Anbaukulturen.

16. Verwendung der Makroemulsion nach einem der Ansprüche 12 bis 13 und 15 für Obstbaumkulturen.

17. Verwendung nach Anspruch 16 für Bananen- und Zitruskulturen.

18. Homogener Ölfilm, erhalten durch Verdampfung der Makroemulsion nach einem der Ansprüche 12 bis 13, wobei der Film weniger als 5 % Wasser umfasst.

19. Homogener Ölfilm nach Anspruch 18, umfassend weniger als 0,5 % Wasser.


**Claims**

1. Emulsifiable concentrate for a macroemulsified phytosanitary composition, comprising:

   - more than 90% by weight of at least one mixture of hydrocarbons having a distillation cut greater than 250°C, comprising less than 20% by weight n-paraffins and less than 1% aromatics, and
   - from 1 to 4% by weight of a mixture of at least two surfactants TA1 and TA2, such that TA2 is more hydrophobic than TA1 for a difference in HLB between TA1 and TA2 varying from 3 to 11 and the HLB of the mixture of which varies from 6 to 10 and comprising
   - from 0.0001% to 1% by weight of water, the surfactant TA1 being chosen from the polyalkoxylated carboxylic acids, comprising a carbon chain with 16 to 20 carbon atoms having at least one olefin bond, each polyalkoxylated group comprising from 3 to 15 alkoxylated radicals, itself comprising from 1 to 4 carbons per oxygen atom, the HLB of said TA1 varying from 5 to 16.

2. Concentrate according to claim 1, **characterized in that** the mixture of hydrocarbons comprises less than 10 ppm sulphur and less than 100 ppm aromatics and is chosen from the group constituted by the hydrodewaxed hydrocarbons containing more than 50% by weight isoparaffins and desulphurized and dearomatized hydrocarbons containing more than 20% by weight naphthenes of which more than 10% are polynaphthenes.

3. Concentrate according to one of claims 1 and 2, **characterized in that** the hydrocarbon mixture comprises more than 50% by weight of hydrocarbons containing from 15 to 30 carbon atoms.

4. Concentrate according to claim 3, **characterized in that** the hydrocarbon mixture comprises more than 70% hydrocarbons containing from 18 to 26 carbon atoms.

5. Concentrate according to one of claims 1 to 2, **characterized in that** the mixture of hydrocarbons is chosen from gas oil cuts having boiling points above 250°C, originating from hydrocracking vacuum distillate gas oils or other refining processes, these cuts having been desulphurized and/or dearomatized by catalytic hydrogenation then distilled into cuts with ranges of less than 75°C, these cuts comprising more than 20% naphthenes and having a pour point below -15°C.

6. Concentrate according to one of claims 1 to 5, **characterized in that** it comprises from 2 to 3% surfactant TA1, and from 0.1 to 0.9% surfactant TA2.

7. Concentrate according to one of the previous claims, **characterized in that** the water content is comprised between 0.05 and 0.5% by weight of the concentrate.

8. Concentrate according to one of the previous claims, **characterized in that** the surfactant TA1 is chosen from the polyethoxylated oleic acids comprising from 4 to 8 ethoxylated radicals.

9. Concentrate according to claim 8, **characterized in that** the polyethoxylated oleic acids comprise 6 ethoxylated radicals on average.

**10.** Concentrate according to one of the previous claims, **characterized in that** the surfactant TA2 is chosen from sorbitan mono- and/or polycarboxylates, ethoxylated sorbitan mono- and/or polycarboxylates, ethoxylated glycerol mono- and/or polycarboxylates, each polycarboxylate group comprising 1 to 3 carbon chains of 12 to 20 carbon atoms having at least one olefin bond, the polyethoxylated group comprising 1 to 5 ethoxylated groups, the HLB of said TA2 varying from 1 to 11.

**11.** Concentrate according to one of the previous claims, **characterized in that** the surfactant TA2 is a sorbitan monooleate or a glycerol monooleate or their mixture.

**12.** Phytosanitary macroemulsion comprising from 0.5% by weight to 10% by weight of the concentrate according to one of claims 1 to 11 and from 99.5% to 90% fresh and/or salt water.

**13.** The macroemulsion according to claim 12, **characterized in that** it comprises from 0.5 to 3% by weight of the concentrate and from 97 to 99.5% fresh or salt water, the creaming time of which according to the procedure MT36 is comprised between 25 seconds and 2 minutes.

**14.** Method for producing the macroemulsion according to one of claims 12 to 13 consisting of mixing the concentrate and the water in a tank on the site of application of the macroemulsion and emulsifying it by means of a static emulsifier or a rotor stator mixer.

**15.** Use of the macroemulsion according to one of claims 12 to 13 for the insecticidal and/or fungicidal treatment of crops.

**16.** Use of the macroemulsion according to one of claims 12 to 13 and 15 for fruit-tree growing.

**17.** Use according to claim 16 for banana and citrus growing.

**18.** Homogenous oil film obtained by vaporization of the macroemulsion according to one of claims 12 to 13, said film comprising less than 5% water.

**19.** Homogenous oil film according to claim 18, comprising less than 0.5% water.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6673360 B
- US 6515031 B
- WO 02064244 A
- WO 2006126211 A
- US 20050261379 A
- EP 0392127 A